# EUROPÄISCHE PATENTSCHRIFT

(11) **EP 2 592 434 B1**
(45) Veröffentlichungstag und Bekanntmachung des Hinweises auf die Patenterteilung: **19.08.2015**
(21) Anmeldenummer: 12191379.2
(22) Anmeldetag: 06.11.2012
(51) Int. Cl.: G01S 15/46, G01S 15/93

(54) **Verfahren zur Erkennung von Objekten im Umfeld eines Fahrzeugs**
Method for recognising objects in the vicinity of a vehicle
Procédé de détection d'objets dans l'environnement d'un véhicule

(30) Priorität: 09.11.2011 DE 102011086025
(43) Veröffentlichungstag der Anmeldung: 15.05.2013
(73) Patentinhaber: ROBERT BOSCH GMBH, 70442 Stuttgart (DE)
(72) Erfinder: Scheuerle, Thomas, 71711 Murr (DE)

(56) Entgegenhaltungen:
- DE-A1-102007 048 848
- JP-A- 9 026 318
- US-A1- 2008 165 620

## Beschreibung

Die Erfindung geht aus von einem Verfahren und einer Vorrichtung für ein Assistenzsystem eines Fahrzeugs zur Erkennung von Objekten im Umfeld des Fahrzeugs gemäß dem Oberbegriff der unabhängigen Ansprüche.

### Stand der Technik

Zur Erkennung von Objekten im Umfeld eines Fahrzeugs sind verschiedene Fahrassistenzsysteme bekannt, die Objekte erkennen und diese einem Fahrer optisch und/oder akustisch darstellen. Derartige Systeme verwenden beispielweise Ultraschallsensoren, um Objekte im Umfeld zu erkennen.

Aus der DE 102 41 464 A1 ist ein System zur Umfelderfassung eines Fahrzeugs bekannt. Mittels Ultraschallsensoren ermittelte Entfernungswerte werden mit Bildern einer Kamera in der Art kombiniert, dass eine Erkennung von Objekten sowohl im Nahbereich, als auch im erfassten Bereich der Kamera verbessert wird und ein Fahrer einen einheitlichen Eindruck von dem Umfeld des Fahrzeugs bekommt.

Aus der DE 103 05 935 A1 ist eine Vorrichtung zur Erfassung von Objekten im Umfeld eines Fahrzeugs bekannt, mit einem Radarsensor und ein im Erfassungsbereich zu diesem überlagerten zusätzlichen Kamerasensor. Hierdurch wird die Erkennung von Objekten im Umfeld verbessert.

Das Dokument DE 10 2007 048 848 A1 beschreibt ein Fahrerassistenzsystem zur Erzeugung von dreidimensionalen Abstandsdaten. Zu diesem Zweck werden ein Ultraschallsystem und ein System zur winkel- und abstandsaufgelösten Konturerfassung miteinander kombiniert. Bei dem System zur Konturerfassung handelt es sich um einen Laserscanner oder einen Rangeimager. Das Ultraschallsystem wird dazu verwendet grobe Hindernisse zu erkennen und das System zur Konturerfassung um die unmittelbare Umgebung des Fahrzeugs zu erfassen. Das Fahrerassistenzsystem ist in der Lage zwischen beachtlichen Hindernissen, die nicht überfahren werden können, wie benachbarte Autos und unbeachtlichen Hindernissen, wie auf der Straße befindliche Kanaldeckel zu unterscheiden.

Das Dokument US 2008/0165620 A1 beschreibt einen Objektsensor, der einen Ultraschallsensor zur Objekterfassung in einem ersten Bereich und ein Erfassungselement zur Objekterfassung in einem zweiten Bereich aufweist. Der erste Bereiche unterscheidet sich dabei zumindest in einem Teilbereich vom zweiten Bereich. Der Ultraschallsensor und das Erfassungselement sind in einer Einheit verbaut.

### Offenbarung der Erfindung

### Vorteile der Erfindung

Die erfindungsgemäße Vorgehensweise mit den kennzeichnenden Merkmalen der unabhängigen Ansprüche weist demgegenüber den Vorteil auf, dass durch eine Kombination von mindestens einem Sensor und einer Kamera mit mindestens einer zusätzlichen Lichtquelle eine verbesserte Zuordnung von ermittelten Entfernungen zwischen Sensoren und Objekten erreicht wird und dadurch eine genauere Bestimmung von Objekten im Umfeld des Fahrzeugs möglich ist.

Weitere vorteilhafte Ausführungsformen der vorliegenden Erfindung sind Gegenstand der Unteransprüche.

So können für den mindestens einen Sensor Ultraschallsensoren eingesetzt werden. Als weitere Ausführungsform können beispielsweise auch Radarsensoren und/oder kapazitive Sensoren mit einer höheren Messgenauigkeit eingesetzt werden.

Vorteilhafterweise wird als zusätzliche Lichtquelle eine LED als Lichtquelle verwendet, wodurch die genauere Bestimmung von Objekten auch bei Umgebungsbedingungen wie bspw. Dunkelheit durchgeführt werden kann. In einer weiteren Ausführungsform wird eine Infrarot-LED und/oder eine Laserdiode verwendet.

Die erfindungsgemäße Vorrichtung für das Assistenzsystem lässt sich sowohl rückwärts, als auch vorwärts gerichtet an einem Fahrzeug umsetzen.

Das Verfahren zur Erkennung von Objekten im Umfeld des Fahrzeugs kann durchgeführt werden, wenn bspw. das Fahrzeug fährt, ohne dass das Fahrzeug vollständig stillstehen muss. Hierdurch entstehen keine Zwangspausen für den Fahrer während eines manuellen und/oder automatischen Einparkvorgangs.

### Kurzbeschreibung der Figuren

Ausführungsbeispiele der Erfindung sind in der Zeichnung dargestellt und in der nachfolgenden Beschreibung näher erläutert.

Es zeigt:
- Figur 1: eine Ausführungsform einer Vorrichtung geeignet zur Ausführung des erfindungsgemäßen Verfahrens;
- Figur 2: eine Ausführungsform einer Vorrichtung nach dem Stand der Technik;
- Figur 3: ein Beispiel für eine Objektkonfiguration bei zwei getrennten Objekten;
- Figur 4: ein Beispiel für eine Objektkonfiguration bei einem zusammenhängenden Objekt; und
- Figur 5: ein Flussdiagramm einer Ausführungsform des erfindungsgemäßen Verfahrens.

### Detaillierte Beschreibung der Ausführungsbeispiele

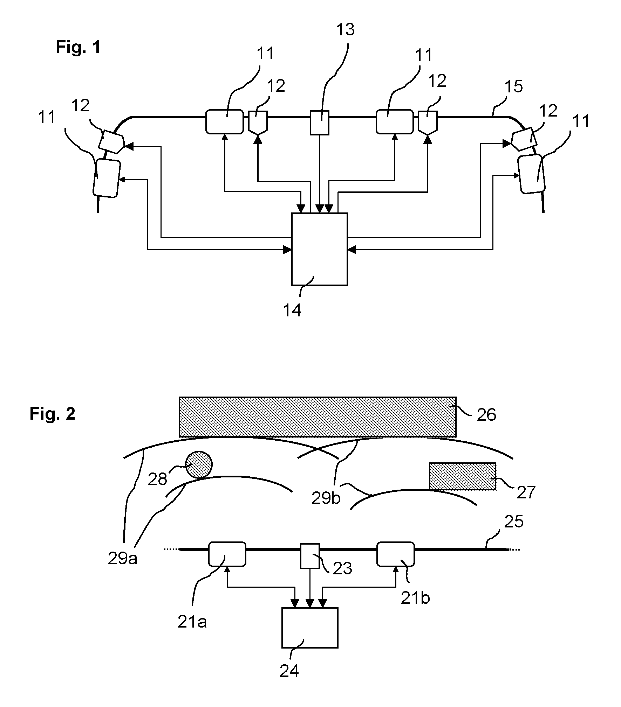

Die in Figur 1 dargestellte Vorrichtung zeigt vereinfacht in einer Draufsicht einen Träger (15), bspw. einen Stoßfänger eines Fahrzeugs. Vorzugsweise sind ein Sensor (11), eine Lichtquelle (12) und eine Kamera (13) jeweils an mindestens einer Stelle in dem Stoßfänger verbaut, jedoch können diese auch an anderen vorteilhaften Positionen des Fahrzeugs angebracht werden, bspw. an einer Heckklappe des Fahrzeugs.

Der mindestens eine Sensor (11), die mindestens eine Lichtquelle (12) und die mindestens eine Kamera (13) sind vorzugsweise mit einem Steuergerät (14) des Fahrzeugs verbunden. Beispielhaft ist in Figur 1 nur ein Steuergerät (14) dargestellt, es können aber auch mehrere über ein Bussystem verbundene Steuergeräte vorgesehen sein.

Die Lichtquelle (12) ist dem Sensor (11) zugeordnet und in unmittelbarer Nähe zu diesem angeordnet.

Die Lichtquelle (12) kann eine LED mit einer Wellenlänge im sichtbaren Bereich, eine Infrarot-LED und/oder eine Laserdiode sein.

Die Lichtquelle (12) ist vorteilhafterweise so dimensioniert, dass eine Sichtbarkeit der reflektierten elektromagnetischen Wellen im Kamerabild gewährleistet ist.

Bei einer weiteren vorteilhaften Ausführungsform bildet die Lichtquelle (12) mit dem Sensor (11) eine bauliche Einheit.

Figur 2 zeigt eine Ausführungsform einer Vorrichtung zur Ermittlung von Objekten gemäß dem Stand der Technik.

In Figur 2 sind Sensoren (21a, 21b) und eine Kamera (23) dargestellt, die in einem Träger (25), bspw. einem Stoßfänger eines Fahrzeugs, verbaut sind.

Mit Hilfe der Sensoren (21a, 21b) können Objekte (26, 27, 28) detektiert werden. Hierzu werden Signale durch die Sensoren (21a, 21b) gesendet und empfangen und aus den Signallaufzeiten Entfernungen berechnet und Raumkoordinaten zu den Objekten (26, 27, 28) ermittelt. Die ausgesandten Signale sind als Halbwellen (29a, 29b) in Figur 2 dargestellt. Beispielsweise werden nur die Entfernungswerte des jeweiligen Sensors (21a, 21b) berücksichtigt. Nach dem Verfahren der klassischen Trilateration werden den Sensoren (21a, 21b) Kreise zugeordnet, deren Radius der von den Sensoren (21a, 21b) gelieferten Entfernungswerten entspricht. An Schnittpunkten dieser Kreise können Raumkoordinaten zu den Objekten (26, 27, 28) ermittelt werden. In der Praxis repräsentieren diese Schnittpunkte aber nicht die Realität. Daher ist die Ermittlung von Raumkoordinaten zu Objekten unter Nutzung von Signallaufzeiten von Kreuz- und Direktechos mit einer Ungenauigkeit behaftet und Objekte werden an falschen Positionen ermittelt.

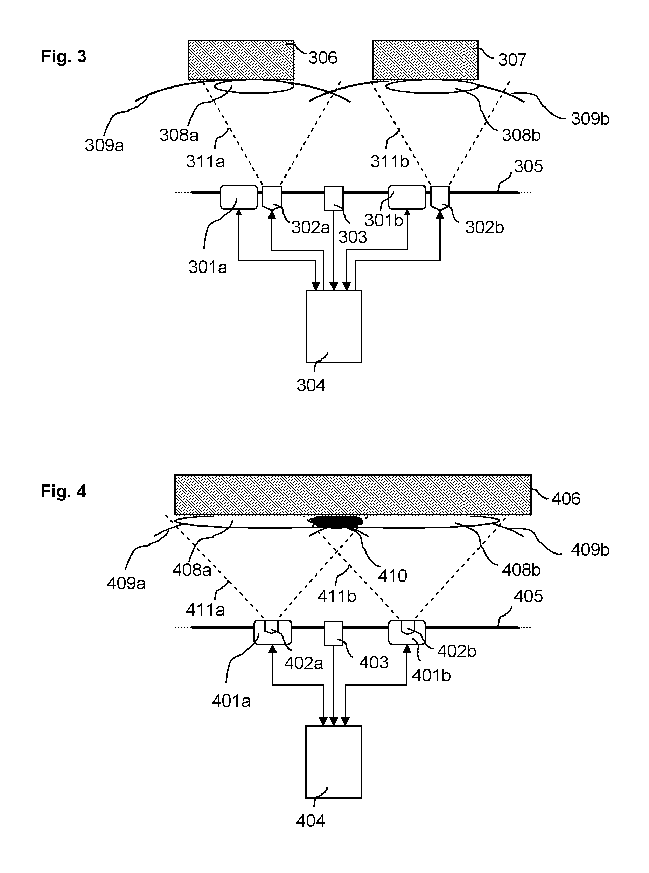

Figur 3 zeigt ein Beispiel mit zwei getrennten Objekten (306, 307). Die Vorrichtung umfasst einen Träger (305), zwei Sensoren (301a, 301b), zwei Lichtquellen (302a, 302b) und eine Kamera (303) sowie ein Steuergerät (304).

In einer weiteren vorteilhaften Ausführungsform, können weitere Sensoren, Lichtquellen und Kameras an weiteren vorteilhaften Positionen des Fahrzeugs angebracht sein.

Die Lichtabstrahlcharakteristik (311a, 311b) der Lichtquellen (302a, 302b) entspricht ungefähr dem akustischen Öffnungswinkel, bspw. 90 Grad, der Sensoren (301a, 301b).

Die Lichtquellen (302a, 302b) sind vorteilhafterweise so dimensioniert, dass eine Sichtbarkeit der reflektierten elektromagnetischen Wellen im Kamerabild gewährleistet ist.

In der Kamera (303) kann ein Filter zur Anhebung der Infrarot-Empfindlichkeit vorgesehen sein.

Zur Ermittlung der Raumkoordinaten der Objekte (306, 307) werden vorteilhafterweise im Wesentlichen zeitgleich zu den Signalen (309a, 309b) der Sensoren (301a, 301b) Lichtpulse durch die Lichtquellen (302a, 302b) erzeugt. Die Lichtquellen (302a, 302b) werden zu Erzeugung der Lichtpulse vorteilhafterweise nacheinander ein- und ausgeschaltet. Die Lichtpulse der Lichtquellen (302a, 302b) werden vorteilhafterweise mit einer Kamerabildfrequenz synchronisiert.

Die Kamera (303) erfasst das Umfeld des Fahrzeugs und in Abhängigkeit von reflektierten Lichtpulsen (308a, 308b) und den Signallaufzeiten der Sensoren (301a, 301b) wird eine Berechnung von Raumkoordinaten der Objekte im Umfeld durchgeführt.

Zur Erkennung von Überlappungen der Lichtpulse auf den Objekten (306, 307), werden die Signale der Kamera (303) im Steuergerät (304) mittels eines bildverarbeitenden Algorithmus verarbeitet und Überlappungen anhand von Bereichen maximaler Helligkeit erkannt.

In Figur 3 tritt keine Überlappung der Lichtpulse auf den Objekten (306, 307) auf. Der Sensor (301a, 301b) mit der zugeordneten Lichtquelle (302a, 302b) liefert also einen Entfernungswert, der von einem Objekt stammt, das von einem anderen Objekt getrennt ist. Die Richtung in der sich das Objekt befindet lässt sich aus dem Bereich auf dem Objekt mit einer maximalen Ausleuchtung der reflektierten Lichtpulse (308a, 308b) bestimmen. Zur weiteren Berechnung der Raumkoordinaten des Objekts kann der Entfernungswert des Sensors (301a, 301b) ohne Berücksichtigung eines Entfernungswerts eines weiteren Sensors (301a, 301b) verwendet werden.

Figur 4 zeigt eine Objektkonfiguration mit einem zusammenhängenden Objekt (406). Als vorteilhafte Ausführungsform, bilden die Sensoren (401a, 401b) in Figur 4 eine bauliche Einheit mit den Lichtquellen (402a, 402b). Die Einheiten aus Sensoren (401a, 401b) und Lichtquellen (402a, 402b) sind mit dem Steuergerät (404) verbunden.

Wird durch die Kamera (403) eine Überlappung (410) der Lichtpulse (408a, 408b) auf dem Objekt (406) festgestellt, dann können die Direktechos der Sensoren (401a, 402b, 402a, 402b) zur Berechnung der Raumkoordinaten des Objekts (406) nach dem Verfahren der Trilateration verwendet werden. Die ausgesandten Signale sind als Halbwellen (409a, 409b) dargestellt.

Aus der Überlappung (410), also dem Bereich der maximalen Ausleuchtung der reflektierten Lichtpulse (408a, 408b), kann der Ort der Reflexionen von Kreuzechos der Sensoren (401a, 401b) bestimmt werden.

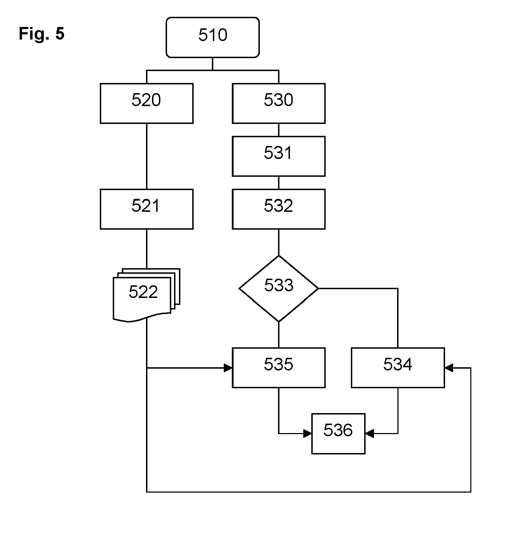

Figur 5 zeigt ein Ablaufdiagramm einer Ausführungsform des erfindungsgemäßen Verfahrens. Liegt bspw. die Fahrtgeschwindigkeit des Fahrzeugs innerhalb vorgebbarer Schwellenwerte, wird der Vorgang zur Erkennung von Objekten im Umfeld des Fahrzeugs gestartet (510).

In einem ersten Schritt (520) sendet mindestens ein Ultraschallsensor Ultraschallsignale aus. In einem weiteren Schritt (530) wird im Wesentlichen zeitgleich die dem Sensor zugeordnete Lichtquelle für einen kurzen Zeitraum, bspw. 10 ms, eingeschaltet. In Schritt (531) wird eine weitere Lichtquelle zeitlich versetzt nach der Lichtquelle aus Schritt (530) für einen kurzen Zeitraum, bspw. 10 ms, eingeschaltet.

Die Echo-Laufzeiten des in Schritt (520) ausgesendeten Ultraschallsignals werden in Schritt (521) durch den Ultraschallsensor und/oder einen weiteren Ultraschallsensor erfasst. Die Ultraschallsignale werden für eine weitere Verarbeitung in einem Speicher (522) zwischengespeichert.

In Schritt (532) erfasst die Kamera die Reflexionen der in den Schritten (530) und (531) ausgesandten Lichtpulse. Die Daten werden in einem Steuergerät weiterverarbeitet und ein Algorithmus erkennt Überlappungen anhand von bspw. Bereichen mit maximaler Helligkeit.

In Abhängigkeit von erkannten Überlappungen wird in Schritt (533) entschieden, wie eine weitere Berechung von Raumkoordinaten von Objekten erfolgt.

Bei einer Überlappung der Lichtpulse, werden in Schritt (534) für die Berechnung von Raumkoordinaten von Objekten nach dem Verfahren der Trilateration Direktechos des Ultraschallsensors verwendet. Ein Reflektionspunkt von Kreuzechos zwischen dem sendenden Ultraschallsensor und einem weiteren empfangenden Ultraschallsensor liegt im Bereich der Überlappung der Lichtpulse. Mit diesen Informationen lassen sich die Entfernungswerte der Sensoren besser zu Objekten zuordnen und Raumkoordinaten von Objekten im Umfeld des Fahrzeugs genauer bestimmen.

Wird bspw. keine Überlappung der Lichtpulse erkannt, wird in Schritt (535) nur der Entfernungswert des sendenden Sensors zur Berechnung der Raumkoordinaten von Objekten verwendet und kein weiterer Entfernungswert eines Nachbarsensors betrachtet.

In Schritt (536) ist der Vorgang abgeschlossen und kann für eine weitere Erfassung wieder für mindestens einen Sensor gestartet werden.

Das Steuergerät und/oder ein vom Steuergerät separater Rechner enthalten vorzugsweise wenigstens einen elektrischen Speicher, in welchem die Verfahrensschritte als Computerprogramm abgelegt sind.

Das erfindungsgemäße Computerprogramm sieht vor, dass alle Schritte des erfindungsgemäßen Verfahrens ausgeführt werden, wenn es in einem Steuergerät und/oder einem vom Steuergerät separaten Rechner abläuft.

Das erfindungsgemäße Computerprogrammprodukt mit einem auf einem maschinenlesbaren Träger gespeicherten Programmcode führt das erfindungsgemäße Verfahren aus, wenn das Programm in einem Steuergerät und/oder einem vom Steuergerät separaten Rechner abläuft.

## Patentansprüche

1. Verfahren für ein Assistenzsystem eines Fahrzeugs zur Erkennung von Objekten im Umfeld des Fahrzeugs mit mindestens einem Ultraschallsensor und mindestens einer Lichtquelle, sowie einer Kamera, sodass im Wesentlichen zeitgleich zu Ultraschallsignalen des Ultraschallsensors Lichtpulse durch die Lichtquelle erzeugt werden, wobei die Kamera das Umfeld erfasst, und in Abhängigkeit von reflektierten Lichtpulsen unter Einbeziehung von Echo-Laufzeiten des durch den Ultraschallsensors gesendeten und empfangenen Ultraschallsignalen, eine Berechnung von Raumkoordinaten von Objekten im Umfeld durchgeführt wird, **dadurch gekennzeichnet, dass** zur Berechnung der Raumkoordinaten von Objekten bei Verwendung von mindestens zwei Lichtquellen anhand der durch die Kamera erfassten Reflexionen eine Überlappung der Lichtpulse der mindestens zwei Lichtquellen auf einem Objekt erkannt wird und für ein Trilaterationsverfahren angenommen wird, dass der Ort der Reflexion von Kreuzechos an den Objekten der Ultraschallsensoren im Wesentlichen am Ort der Überlappung der Lichtpulse liegt.

2. Verfahren nach einem der vorhergehenden Ansprüche, **dadurch gekennzeichnet, dass** bei Verwendung von mindestens zwei Lichtquellen, diese nacheinander eingeschaltet werden.

3. Verfahren nach einem der vorhergehenden Ansprüche, **dadurch gekennzeichnet, dass** eine Lichtabstrahlcharakteristik der mindestens einen Lichtquelle ungefähr dem akustischen Öffnungswinkel des Ultraschallsensors entspricht.

4. Verfahren nach einem der vorhergehenden Ansprüche, **dadurch gekennzeichnet, dass** der Lichtpuls mit einer Kamerabildfrequenz synchronisiert ist.

5. Verfahren nach einem der vorhergehenden Ansprüche, **dadurch gekennzeichnet, dass** die Helligkeit der mindestens einen Lichtquelle so dimensioniert ist, dass eine Sichtbarkeit in einem Kamerabild gewährleistet ist.

6. Vorrichtung geeignet zur Durchführung eines Verfahrens nach einem der vorhergehenden Ansprüche für ein Assistenzsystem eines Fahrzeugs zur Erkennung von Objekten im Umfeld des Fahrzeugs mit mindestens einem Ultraschallsensor und mindestens einer Lichtquelle, sowie einer Kamera, **dadurch gekennzeichnet, dass** im Wesentlichen zeitgleich zu Ultraschallsignalen des Ultraschallsensors Lichtpulse durch die Lichtquelle erzeugt werden, wobei die Kamera das Umfeld und Reflexionen der Lichtpulse erfasst.

7. Vorrichtung nach Anspruch 6, **dadurch gekennzeichnet, dass** dem Ultraschallsensor eine Lichtquelle zugeordnet ist, die in direkter Nähe zu dem Ultraschallsensor angeordnet ist.

8. Vorrichtung nach Anspruch 6, **dadurch gekennzeichnet, dass** dem Ultraschallsensor eine Lichtquelle zugeordnet ist, wobei der Ultraschallsensor und die Lichtquelle eine bauliche Einheit bilden.

9. Vorrichtung nach einem der vorhergehenden Ansprüche, **dadurch gekennzeichnet, dass** als Lichtquelle eine LED, eine Infrarot-LED und/oder eine Laserdiode eingesetzt wird.

10. Computerprogramm mit Programmcodemitteln, um alle Schritte eines Verfahrens nach einem der Ansprüche 1 bis 5 durchzuführen, wenn das Computerprogramm auf einem Computer oder einer entsprechenden Recheneinheit ausgeführt wird.

11. Computerprogrammprodukt mit Programmcodemitteln, die auf einem computerlesbaren Datenträger gespeichert sind, um alle Schritte eines Verfahrens nach einem der Ansprüche 1 bis 5 durchzuführen, wenn ein Computerprogramm nach Anspruch 10 auf einem Computer oder einer entsprechenden Recheneinheit ausgeführt wird.

## Claims

1. Method for an assistance system in a vehicle for detecting objects in the environment of the vehicle with at least one ultrasonic sensor and at least one light source as well as a camera, with the result that light pulses are generated by the light source substantially at the same time as ultrasonic signals from the ultrasonic sensor, the camera recording the environment, and spatial coordinates of objects in the environment being calculated on the basis of reflected light pulses with the inclusion of echo propagation times of the ultrasonic signals transmitted and received by the ultrasonic sensor, **characterized in that**, in order to calculate the spatial coordinates of objects when using at least two light sources, an overlap of the light pulses from the at least two light sources on an object is detected on the basis of the reflections recorded by the camera and it is assumed, for a trilateration method, that the location at which cross-echoes of the ultrasonic sensors are reflected at the objects is substantially at the location of the overlap of the light pulses.

2. Method according to Claim 1, **characterized in that**, when at least two light sources are used, they are switched on in succession.

3. Method according to one of the preceding claims, **characterized in that** a light emission characteristic of the at least one light source corresponds approximately to the acoustic opening angle of the ultrasonic sensor.

4. Method according to one of the preceding claims, **characterized in that** the light pulse is synchronized with a camera image frequency.

5. Method according to one of the preceding claims, **characterized in that** the brightness of the at least one light source is dimensioned such that visibility in a camera image is ensured.

6. Apparatus suitable for carrying out a method according to one of the preceding claims for an assistance system in a vehicle for detecting objects in the environment of the vehicle with at least one ultrasonic sensor and at least one light source as well as a camera, **characterized in that** light pulses are generated by the light source substantially at the same time as ultrasonic signals from the ultrasonic sensor, the camera recording the environment and reflections of the light pulses.

7. Apparatus according to Claim 6, **characterized in that** a light source is assigned to the ultrasonic sensor and is arranged in the direct vicinity of the ultrasonic sensor.

8. Apparatus according to Claim 6, **characterized in that** a light source is assigned to the ultrasonic sensor, the ultrasonic sensor and the light source forming a structural unit.

9. Apparatus according to one of Claims 6 to 8, **characterized in that** an LED, an infrared LED and/or a laser diode is/are used as the light source.

10. Computer program having program code means for carrying out all of the steps of a method according to one of Claims 1 to 5 when the computer program is executed on a computer or a corresponding computing unit.

11. Computer program product having program code means which are stored on a computer-readable data storage medium in order to carry out all steps of a method according to one of Claims 1 to 5 when a computer program according to Claim 10 is executed on a computer or a corresponding computing unit.

## Revendications

1. Procédé pour un système d'assistance d'un véhicule destiné à reconnaître des objets dans l'environnement du véhicule, comprenant au moins un détecteur à ultrasons et au moins une source de lumière, ainsi qu'une caméra, de sorte que des impulsions lumineuses soient générées par la source de lumière de manière sensiblement simultanée avec les signaux ultrasoniques du détecteur à ultrasons, la caméra balayant l'environnement et un calcul des coordonnées dans l'espace des objets se trouvant dans l'environnement étant effectué en fonction des impulsions lumineuses réfléchies en intégrant les temps de propagation d'écho des signaux ultrasoniques émis et reçus par le détecteur à ultrasons, **caractérisé en ce que** pour calculer les coordonnées dans l'espace des objets en utilisant au moins deux sources de lumière au moyen des réflexions captées par la caméra, une superposition des impulsions lumineuses des au moins deux sources de lumière sur un objet est identifiée et, pour un procédé de trilatération, il est supposé que l'endroit de la réflexion des échos croisés sur les objets des détecteurs à ultrasons se trouve sensiblement à l'endroit de la superposition des impulsions lumineuses.

2. Procédé selon la revendication 1, **caractérisé en ce que** lors de l'utilisation d'au moins deux sources de lumière, celles-ci sont mises en marche l'une après

3. Procédé selon l'une des revendications précédentes, **caractérisé en ce qu'**une caractéristique de rayonnement de la lumière de l'au moins une source de lumière correspond approximativement à l'angle d'ouverture acoustique du détecteur à ultrasons.

4. Procédé selon l'une des revendications précédentes, **caractérisé en ce que** l'impulsion lumineuse est synchronisée avec une fréquence d'image de caméra.

5. Procédé selon l'une des revendications précédentes, **caractérisé en ce que** la luminosité de l'au moins une source de lumière est réglée de telle sorte qu'une visibilité d'une image de caméra est garantie.

6. Dispositif conçu pour mettre en oeuvre un procédé selon l'une des revendications précédentes pour un système d'assistance d'un véhicule destiné à reconnaître des objets dans l'environnement du véhicule, comprenant au moins un détecteur à ultrasons et au moins une source de lumière, ainsi qu'une caméra, **caractérisé en ce que** des impulsions lumineuses sont générées par la source de lumière de manière sensiblement simultanée avec les signaux ultrasoniques du détecteur à ultrasons, la caméra balayant l'environnement et captant les réflexions des impulsions lumineuses.

7. Dispositif selon la revendication 6, **caractérisé en ce qu'**au détecteur à ultrasons est associée une source de lumière, laquelle est disposée à proximité immédiate du détecteur à ultrasons.

8. Dispositif selon la revendication 6, **caractérisé en ce qu'**une source de lumière est associée au détecteur à ultrasons, le détecteur à ultrasons et la source de lumière formant une unité structurale.

9. Dispositif selon l'une des revendications 6 à 8, **caractérisé en ce que** la source de lumière utilisée est une LED, une LED à infrarouges et/ou une diode laser.

10. Programme informatique comprenant des moyens de code de programme pour exécuter toutes les étapes d'un procédé selon l'une des revendications 1 à 5 lorsque le programme informatique est exécuté sur un ordinateur ou une unité de calcul correspondante.

11. Programme informatique comprenant des moyens de code de programme qui sont enregistrés sur un support de données lisible par ordinateur pour exécuter toutes les étapes d'un procédé selon l'une des revendications 1 à 5 lorsqu'un programme informatique selon la revendication 10 est exécuté sur un ordinateur ou une unité de calcul correspondante.
